# EUROPÄISCHE PATENTSCHRIFT

(11) **EP 2 690 331 B1**
(45) Veröffentlichungstag und Bekanntmachung des Hinweises auf die Patenterteilung: **11.03.2015**
(21) Anmeldenummer: 13002662.8
(22) Anmeldetag: 22.05.2013
(51) Int. Cl.: F16K 31/06

(54) **Magnetventil**
Solenoid valve
Soupape magnétique

(30) Priorität: 24.07.2012 DE 102012106683
(43) Veröffentlichungstag der Anmeldung: 29.01.2014
(73) Patentinhaber: DORMA GmbH + Co. KG, 58256 Ennepetal (DE)
(72) Erfinder: Wildförster, Thomas, D-58332 Schwelm (DE); Bienek, Volker, D-44143 Dortmund (DE)

(56) Entgegenhaltungen:
- EP-A2- 0 256 445
- US-A- 5 407 174
- US-A1- 2003 178 594

## Beschreibung

Die vorliegende Erfindung betrifft ein Magnetventil mit einem Gehäuse, in dem ein axial verschiebbar gelagerter Anker angeordnet ist, der mit einem Polkern zusammenwirkt.

Derartige Magnetventile sind hinlänglich bekannt. Sie lassen sich allgemein zur leckölfreien, direkten Steuerung von Verbrauchern einsetzen. Bei diesen Magnetventilen besteht das Problem, dass die Größe des Luftspalt zwischen Anker und Polkern aufgrund von Bauteiltoleranzen schwankt. Der schwankende Luftspalt führt zu einer großen Streuung der Magnetkraft und so zu einer zu hohen oder zu niedrigen Anpresskraft zwischen dem Dichtkörper und dem Ventilsitz. Dies kann einerseits zu einer Beschädigung des Ventils oder andererseits zu Leckagen führen. Des Weiteren können auch Magnetfeldstreuungen der Spulen ausgeglichen werden.

Aus der US 5 407 174 A wird ein Magnetventil bekannt, bei dem der Luftspalt zwischen Polkern und Anker einstellbar ist.

Es ist daher Aufgabe der vorliegenden Erfindung, hier Abhilfe zu schaffen.

Diese Aufgabe wird bei einem Magnetventil mit einem Gehäuse, in dem ein axial verschiebbar gelagerter Anker angeordnet ist, der mit einem Polkern zusammenwirkt, erfindungsgemäß dadurch gelöst, dass die von dem Polkern auf den Anker ausgeübte Magnetkraft durch eine Verstellung des Luftspaltes zwischen dem Polkern und dem Anker einstellbar ist, wobei der Anker in einer mit dem Polkern verbundenen Hülse angeordnet ist und der Luftspalt zwischen Polkern und Anker durch Drehen der Hülse (11) einstellbar ist.

Um eine leichte Verstellung des Luftspaltes zu ermöglichen, ist der Anker in einer mit dem Polkern verbundenen Hülse angeordnet. Der Anker ist dabei in der Hülse beweglich, wobei sich die Einstellung der Magnetkraft besonders einfach gestaltet. Hierzu ist der Polkern bevorzugt über ein Gewinde (auch: Steigungsgewinde) mit einem Gehäuse des Magnetventils oder einem Einsatz in dem Gehäuse verschraubt. Vorzugsweis ist das Gewinde selbsthemmend und/oder mit einer kleinen Steigung ausgebildet. Die Steigung liegt vorzugweise bei höchstens 1 mm, besonders vorzugsweise bei höchstens 0,5mm. Durch dieses Gewinde kann der Polkern relativ zum Ventilsitz verschoben werden.

Die erfindungsgemäße Lösung bietet den Vorteil, dass mit einfachen Mitteln eine Beschädigung des Ventils durch zu hohe Anpresskräfte zwischen dem Dichtkörper und dem Ventilsitz vermieden werden kann, indem der Luftspalt zwischen dem Polkern und dem Anker auf ein definiertes Maß festgelegt und damit die jeweilig erforderliche Magnetkraft exakt eingestellt werden kann. So ist erfindungsgemäß ein optimales Betriebsspaltmaß für den Luftspalt einstellbar, um Bauteiltoleranzen auszugleichen und eine maximale Kraft zu übertragen.

Die Unteransprüche haben vorteilhafte Weiterbildungen der Erfindung zum Inhalt.

Die beschriebene Problematik bei starren, nicht einstellbaren Ausführungen wird hier durch die axiale Einstellbarkeit des Luftspalts vermieden. Die Verwendung eines Gewindes führt zu einer stufenlosen, axialen Einstellbarkeit des Betriebsspaltmaßes für den Luftspalt, wobei die Einstellung im verschlossenen und abgedichteten Zustand des Magnetventils erfolgen kann.

Dies lässt sich gemäß einer bevorzugten Ausgestaltung besonders einfach realisieren, wenn die Hülse und der Polkern formschlüssig und verdrehsicher miteinander verbunden sind.

Um die Hülse leicht drehen zu können, ist die Hülse vorteilhafterweise mit einem aus dem Gehäuse herausragenden Ansatz für den Angriff eines Werkzeuges versehen. Somit kann der Luftspalt zwischen Polkern und Anker und damit die auf den Anker wirkende Magnetkraft schnell und ohne großen Aufwand verändert bzw. eingestellt werden, ohne dass das System geöffnet werden muss.

Gemäß einer vorteilhaften Weiterbildung ist der Polkern mit einer zentralen Längsbohrung versehen, in welcher ein Ventilstößel geführt ist, der von dem Anker beaufschlagbar ist.

Der Ventilstößel wirkt vorteilhafterweise mit einem Ventilsitz zusammen, der in einer Ventilhülse angeordnet ist.

Um die Ventilhülse leicht auswechseln zu können, ist diese vorteilhafterweise in das Gehäuse eingeschraubt.

Beim Einstellen des Spaltes zwischen Anker und Polkern wird der Polkern relativ zum Ventilsitz und somit relativ zur Ventilhülse verschoben. Bevorzugt ist vorgesehen, dass der Polkern mittels einer Spielpassung auf der Ventilhülse geführt ist.

Weiterhin ist gemäß einer bevorzugten Ausgestaltung der Ventilsitz in die Ventilhülse eingepresst, um hierbei Ventilsitze mit größeren und kleineren Bohrungen oder unterschiedlichen Ventilgeometrien in einer einheitlichen Ventilhülse aufzunehmen. Eine größere Bohrung bedeutet einen kleineren Sperr- bzw. Haltedruck bei gleicher Krafteinleitung sowie bei einer kleineren Bohrung einen größeren Sperr- oder Haltedruck bei gleicher Krafteinleitung.

An der Ventilhülse ist weiterhin ein austauschbarer Filter angeordnet, um je nach Bedarf Filter mit unterschiedlichen Maschenweiten verwenden zu können.

Wenn gemäß einer bevorzugten Ausgestaltung der Polkern im Bereich des der Ventilhülse zugewandten Endes von einer Stahlscheibe umgeben ist, kann ein ausreichend großes Magnetfeld aufgebaut werden, so dass das Gehäuse auch aus einem nichtmagnetischen Material, wie beispielsweise Aluminium, bestehen kann.

Das gesamte Magnetventil ist vorteilhafterweise modular aufgebaut und kann beispielsweise Hydraulikblock, Ventilhülse und Magneteinheit als jeweils eigenständige und auswechselbare Baugruppe enthalten.

Weitere Einzelheiten, Merkmale und Vorteile der Erfindung ergeben sich aus der nachfolgenden Beschreibung anhand der Zeichnungen. Es zeigen:
- Figur 1: einen Schnitt durch ein erfindungsgemäßes Magnetventil in geschlossenem Zustand,
- Figur 2: einen Schnitt durch das erfindungsgemäße Magnetventil in geöffnetem Zustand, und
- Figur 3: eine perspektivische Schnittansicht des erfindungsgemäßen Magnetventils in geöffnetem Zustand.

Das erfindungsgemäße Magnetventil besitzt ein Gehäuse 1, in das eine Ventilhülse 2 eingeschraubt ist. In die Ventilhülse 2 ist ein Ventilsitz 3 mit einer Durchgangsbohrung 4 eingepresst. Auf der in Fließrichtung vorderen Seite der Durchgangsbohrung 4 ist ein austauschbarer Filter 5 in die Ventilhülse 2 eingeschraubt bzw. eingepresst.

Auf der in Fließrichtung hinteren Seite der Durchgangsbohrung 4 ist die Durchgangsbohrung 4 mit einer Kugel 6 verschließbar, welche in einem Ventilstößel 7 gelagert ist. Der Ventilstößel 7 wird von einer Feder 8 von der Ventilhülse 2 weggedrückt und ist damit in Richtung der geöffneten Stellung des Magnetventils vorbelastet.

Der Ventilstößel 7 erstreckt sich durch eine zentrale Längsbohrung 9 eines Polkerns 10, welcher mit einer Hülse 11 verbunden ist. Die Lagerung von Polkern 10 und Hülse 11 in dem Gehäuse 1 ist wie folgt gewählt: Die Hülse 11 und der Polkern 10 können gemeinsam verdreht und verschoben werden, da die Hülse 11 und der Polkern 10 formschlüssig und verdrehsicher miteinander verbunden sind, wobei die aus Hülse 11 und Polkern 10 bestehende Einheit verdrehbar und verschiebbar im Gehäuse 1 gehalten ist. Der Polkern 10 ist hierzu über ein Gewinde 15 (auch: Steigungsgewinde) mit dem Gehäuse 1 verschraubt. Das Gewinde 15 ist selbsthemmend und ermöglicht ein Verschieben des Polkerns 10 relativ zum Gehäuse 1 und relativ zur gehäusefesten Ventilhülse 2.

In der Hülse 11 ist auf der, der Ventilhülse 2 abgewandten Seite des Polkerns 10 ein Anker 12 verschiebbar gelagert. Der Ventilstößel 7 steht Richtung auf den Anker 12 geringfügig über den Polkern 10 über, um sicher zu stellen, dass sich Polkern 10 und Anker 12 im bestromten Zustand nicht berühren, um so einen Polkurzschluss zu vermeiden.

Die Hülse 11 ist mit einem aus dem Gehäuse 1 herausragenden Ansatz 13 versehen, an dem eine Eingriffsmöglichkeit für ein Werkzeug, beispielsweise ein Schraubenschlüssel, vorhanden ist.

Im Bereich des der Ventilhülse 2 zugewandten Endes des Polkerns 10 ist dieser von einer Stahlscheibe 14 umgeben, um auch dann ein genügend großes Magnetfeld aufbauen zu können, wenn das Gehäuse 1 aus einem nichtmagnetischen Material, wie beispielsweise Aluminium, besteht.

Das gesamte Magnetventil kann modular aufgebaut sein und beispielsweise Hydraulikblock, Ventilhülse und Magneteinheit als jeweils eigenständige und auswechselbare Baugruppe enthalten.

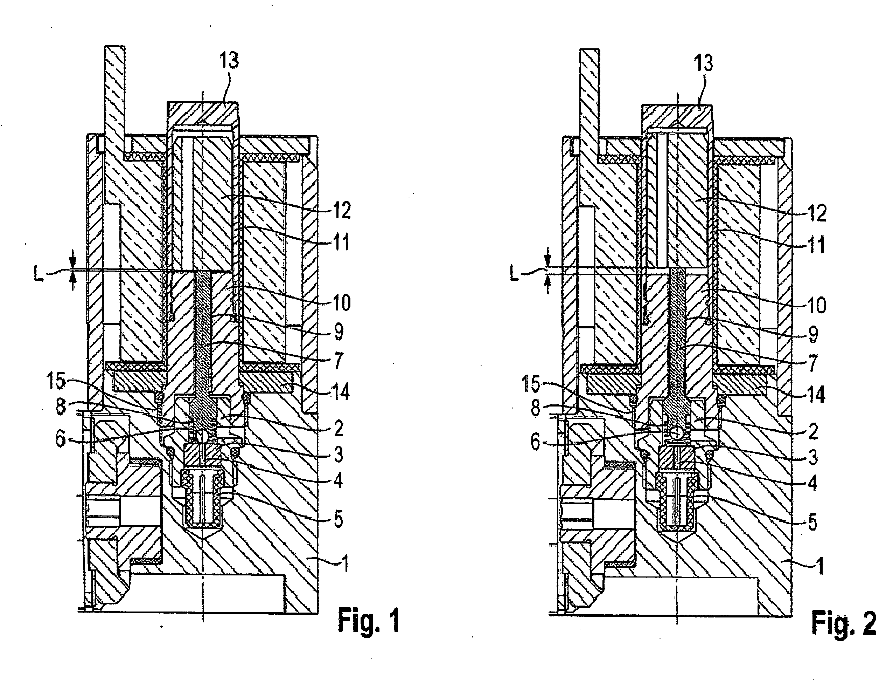

In Figur 1 ist das Magnetventil bestromt dargestellt. In dieser Stellung wird der Anker 12 in Richtung des Polkerns 10 gezogen und drückt dabei den Ventilstößels 7 gegen die Kraft der Feder 8 in Richtung Ventilsitz 3. Der Ventilstößel 7 wiederrum drückt die in ihm gelagerte Kugel 6 gegen den Ventilsitz 3 und dichtet so die Durchgangsbohrung 4 ab. Das Magnetventil ist somit geschlossen.

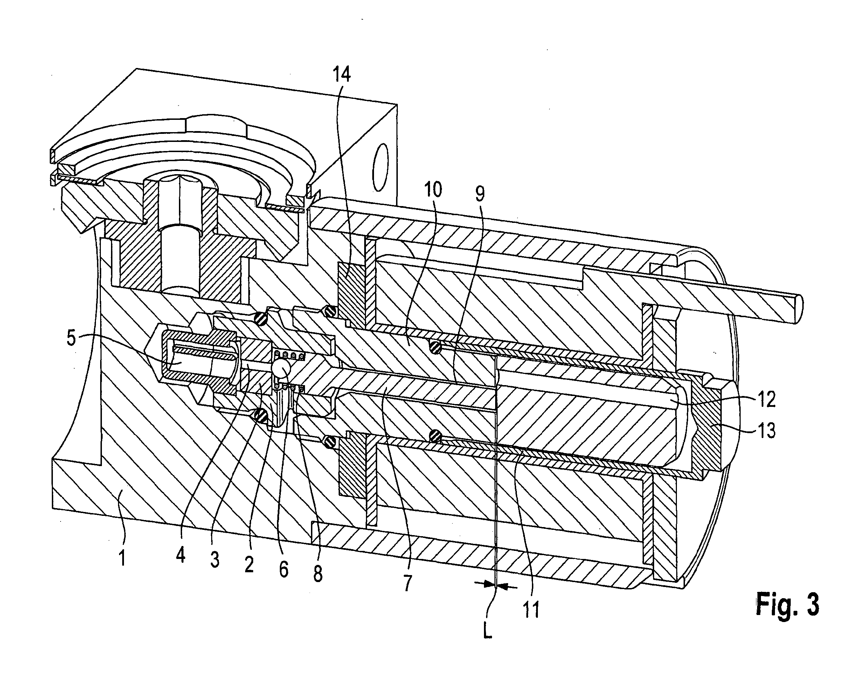

In Figur 2 und 3 ist das Magnetventil nicht bestromt dargestellt. In dieser Stellung wird der Anker 12 nicht mehr über Magnetfelder der Spule in Richtung des Polkerns 10 gezogen. Infolgedessen kann die Feder 8 den Ventilstößel 7 von dem Ventilsitz 3 wegdrücken. Dabei nimmt der Ventilstößel 7 den Anker 12 mit und schiebt ihn von dem Polkern 10 weg. Da nunmehr die Kugel 6 nicht mehr belastet ist, wird die Durchgangsbohrung 4 freigegeben. Das Magnetventil ist somit geöffnet.

Im Ausführungsbeispiel ist das Ventil als Kugelsitzventil ausgebildet, jedoch ist auch eine Ausgestaltung als Kegelsitzventil denkbar.

Um nun zu verhindern, dass die Kugel 6 zu fest oder zu schwach in den Ventilsitz 3 gepresst wird, kann erfindungsgemäß die vom Polkern 10 auf den Anker 12 ausgeübte Magnetkraft im bestromten Zustand eingestellt werden.

Wie bereits weiter oben ausgeführt, steht bei geschlossenem Ventilsitz 3 der Ventilstößel 7 in Richtung auf den Anker 12 im bestromten Zustand geringfügig über den Polkern 10 über, um sicher zu stellen, dass sich Polkern 10 und Anker 12 in bestromten Zustand nicht berühren. Die Hubkraft des Ankers 12 soll nämlich nicht durch Flächenberührung (Polkurzschluss) auf den Polkern 10 übertragen werden, sondern auf den überstehenden Ventilstößel 7. Die axiale Erstreckung dieses zwischen dem Polkern 10 und dem Anker 12 gebildeten Luftspaltes L hat direkten Einfluss auf die Größe der von dem Polkern 10 auf den Anker 12 ausgeübten Magnetkraft. Um nun die Magnetkraft einzustellen, wird die Hülse 11 im bestromten Zustand über ein geeignetes Werkzeug gedreht. Infolge dieser Drehung und der oben beschriebenen Lagerung von Polkern 10 und Hülse 11 mittels des Gewindes 15 bewegt sich der Polkern 10 - je nach Drehrichtung - auf den Anker 12 zu oder von ihm weg und verringert bzw. vergrößert so den Luftspalt L und damit die auf den Anker 12 ausgeübte Magnetkraft.

Erfindungsgemäß ist es ausreichend, wenn der Luftspalt L im Bereich von 0,2 - 0,5 mm eingestellt werden kann.

Das erfindungsgemäße Magnetventil lässt sich bevorzugt in Verbindung mit Bodentürschließern, schmalen integrierten Türschließern und Türantrieben einsetzen, wobei die Einstellbarkeit des zuvor beschriebene Magnetventils auch in anderen Ventilen wie beispielsweise in 3/2-Wegeventilen oder 4/2-Wegeventilen umsetzbar ist. Insbesondere bietet sich eine Verwendung der Erfindung in Sitzventilen an.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste

- 1: Gehäuse
- 2: Ventilhülse
- 3: Ventilsitz
- 4: Durchgangsbohrung
- 5: Filter
- 6: Kugel
- 7: Ventilstößel
- 8: Feder
- 9: Längsbohrung
- 10: Polkern
- 11: Hülse
- 12: Anker
- 13: Ansatz
- 14: Stahlscheibe
- 15: Gewinde
- L: Luftspalt

## Patentansprüche

1. Magnetventil, mit einem Gehäuse (1) in dem ein axial verschiebbar gelagerter Anker (12) angeordnet ist, der mit einem Polkern (10) zusammenwirkt, wobei die von dem Polkern (10) auf den Anker (12) ausgeübte Magnetkraft durch eine Verstellung des Luftspaltes (L) zwischen dem Polkern (10) und dem Anker (12) einstellbar ist, **dadurch gekennzeichnet, dass** der Anker (12) in einer mit dem Polkern (10) verbundenen Hülse (11) angeordnet ist, und dass der Luftspalt (L) zwischen Polkern (10) und Anker (12) durch Drehen der Hülse (11) einstellbar ist.

2. Magnetventil nach Anspruch 1, **dadurch gekennzeichnet, dass** der Polkern (10) über ein Gewinde (15) mit einem Gehäuse (1) des Magnetventils einstellbar verbunden ist.

3. Magnetventil nach einem der vorhergehenden Ansprüche, **dadurch gekennzeichnet, dass** die Hülse (11) und der Polkern (10) formschlüssig und verdrehsicher miteinander verbunden sind.

4. Magnetventil nach Anspruch 3, **dadurch gekennzeichnet, dass** die Hülse (11) mit einem aus dem Gehäuse (1) herausragenden Ansatz (13) für den Angriff eines Werkzeuges versehen ist.

5. Magnetventil nach einem der Ansprüche 1 bis 4, **dadurch gekennzeichnet, dass** der Polkern (10) mit einer zentralen Längsbohrung (9) versehen ist, in welcher ein Ventilstößel (7) geführt ist, der von dem Anker (12) beaufschlagbar ist.

6. Magnetventil nach Anspruch 5, **dadurch gekennzeichnet, dass** der Ventilstößel (7) mit einem Ventilsitz (3) zusammenwirkt, der in einer Ventilhülse (2) angeordnet ist.

7. Magnetventil nach Anspruch 5, **dadurch gekennzeichnet, dass** der Polkern (10) über eine gleitbewegliche Spielpassung mit der Ventilhülse (2) verbunden.

8. Magnetventil nach Anspruch 5 oder 6, **dadurch gekennzeichnet, dass** die Ventilhülse (2) in das Gehäuse (1) eingeschraubt ist.

9. Magnetventil nach einem der Ansprüche 6 bis 8, **dadurch gekennzeichnet, dass** der Ventilsitz (3) in die Ventilhülse (2) eingepresst ist.

10. Magnetventil nach einem der Ansprüche 1 bis 9, **dadurch gekennzeichnet, dass** an der Ventilhülse (2) ein austauschbarer Filter (5) angeordnet ist.

11. Magnetventil nach einem der Ansprüche 1 bis 10, **dadurch gekennzeichnet, dass** der Polkern (10) im Bereich des der Ventilhülse (2) zugewandten Endes von einer Stahlscheibe (14) umgeben ist.

12. Magnetventil nach einem der Ansprüche 1 bis 11, **gekennzeichnet durch** einen modularen Aufbau.

13. Magnetventil nach einem der vorhergehenden Ansprüche, **dadurch gekennzeichnet, dass** der Polkern (10) mittels einer Dichtung gegenüber einem Gehäuse (1) verdrehsicher angeordnet ist.

14. Magnetventil nach einem der vorhergehenden Ansprüche, **dadurch gekennzeichnet, dass** der Luftspalt (L) zwischen dem Polkern (10) und dem Anker (12) im mit Fluid gefüllten Zustand des Magnetventils einstellbar ist.

## Claims

1. A solenoid valve, having a housing (1), in which an axially displaceably supported armature (12) is disposed, which cooperates with a pole core (10), wherein the magnetic force exerted by the pole core (10) onto the armature (12) can be adjusted by means of an adjustment of the air gap (L) between the pole core (10) and the armature (12), **characterized in that** the armature (12) is disposed in a bushing (11), which is connected to the pole core (10), and **in that** the air gap (L) between the pole core (10) and the armature (12) can be adjusted by rotating the bushing (11).

2. The solenoid valve according to claim 1, **characterized in that** the pole core (10) is connected to be adjustable via a thread (15) to a housing (1) of the solenoid valve.

3. The solenoid valve according to any of the preceding claims, **characterized in that** the bushing (11) and the pole core (10) are positively and anti-rotationally protected connected to each other.

4. The solenoid valve according to claim 3, **characterized in that** the bushing (11) is provided with flange (13) protruding from the housing (1) for the action of a tool.

5. The solenoid valve according to any of the claims 1 to 4, **characterized in that** the pole core (10) is provided with a central longitudinal bore (9) in which a valve lifter (7) is guided, which can be charged by the armature (12).

6. The solenoid valve according to claim 5, **characterized in that** the valve lifter (7) cooperates with a valve seat (3), which is disposed in a valve sleeve (2).

7. The solenoid valve according to claim 5, **characterized in that** the pole core (10) is connected to the valve sleeve (2) via a sliding movable clearance fit.

8. The solenoid valve according to claim 5 or 6, **characterized in that** the valve sleeve (2) is screwed into the housing (1).

9. The solenoid valve according to any of the claims 6 to 8, **characterized in that** the valve seat (3) is pressed into the valve sleeve (2).

10. The solenoid valve according to any of the claims 1 to 9, **characterized in that** an exchangeable filter (5) is disposed at the valve sleeve (5).

11. The solenoid valve according to any of the claims 1 to 10, **characterized in that**, in the area of the end facing the valve sleeve (2), the pole core (10) is surrounded by a steel disc (14).

12. The solenoid valve according to any of the claims 1 to 11, **characterized by** a modular construction

13. The solenoid valve according to any of the preceding claims, **characterized in that** the pole core (10) is disposed in relation to a housing (1) anti-rotationally protected by means of a seal.

14. The solenoid valve according to any of the preceding claims, **characterized in that** the air gap (L) between the pole core (10) and the armature (12) is adjustable when the solenoid valve is in the condition filled with fluid.

## Revendications

1. Vanne magnétique, avec un boîtier (1) dans lequel est agencé une armature (12) qui est supportée de façon déplaçable et coopère avec un noyau de pôle (10), la force magnétique exercée par le noyau de pôle (10) sur l'armature (12) étant ajustable par l'intermédiaire d'une modification de la fente d'air (L) entre le noyau de pôle (10) et l'armature (12), **caractérisée en ce que** l'armature (12) est agencée dans un manchon (11) connecté au noyau de pôle (10) et **en ce que** la fente d'air (L) entre le noyau de pôle (10) et l'armature (12) se règle par rotation du manchon (11).

2. Vanne magnétique selon la revendication 1, **caractérisée en ce que** le noyau de pôle (10) est connecté de façon réglable avec un boîtier (1) de la vanne magnétique par l'intermédiaire d'un filetage (15).

3. Vanne magnétique selon l'une des revendications précédentes, **caractérisée en ce que** le manchon (11) et le noyau de pôle (10) sont reliés entre eux par la forme et de façon à résister à la rotation.

4. Vanne magnétique selon la revendication 3, **caractérisée en ce que** le manchon (11) est pourvu d'une prolongation (13) projetant du boîtier (1) pour l'engrenage d'un outil.

5. Vanne magnétique selon l'une des revendications 1 à 4, **caractérisée en ce que** le noyau de pôle (10) est pourvu d'un alésage longitudinal central (9) dans lequel une tige de vanne (7) est guidée qui peut être chargée par l'armature (12).

6. Vanne magnétique selon la revendication 5, **caractérisée en ce que** la tige de vanne (7) coopère avec un siège de vanne (3) qui est agencé dans un manchon de vanne (2).

7. Vanne magnétique selon la revendication 5, **caractérisée en ce que** le noyau de pôle (10) est connecté au manchon de vanne (2) par l'intermédiaire d'un ajustement avec jeu déplaçable par glissement.

8. Vanne magnétique selon la revendication 5 ou 6, **caractérisée en ce que** le manchon de vanne (2) est vissé dans le boîtier (1).

9. Vanne magnétique selon l'une des revendications 6 à 8, **caractérisée en ce que** le siège de vanne (3) est pressé dans le manchon de vanne (2).

10. Vanne magnétique selon l'une des revendications 1 à 9, **caractérisée en ce qu'**un filtre échangeable est agencé dans le manchon de vanne (2).

11. Vanne magnétique selon l'une des revendications 1 à 10, **caractérisée en ce que,** dans la région de l'extrémité orientée vers le manchon de vanne (2), le noyau de pôle (10) est entouré d'un disc en acier (14).

12. Vanne magnétique selon l'une des revendications 1 à 11, **caractérisée par** une construction modulaire.

13. Vanne magnétique selon l'une des revendications précédentes, **caractérisée en ce que** le noyau de pôle (10) est agencé de façon à résister à la rotation par rapport à un boîtier (1) par l'intermédiaire d'un joint.

14. Vanne magnétique selon l'une des revendications précédentes, **caractérisée en ce que** la fente d'air (L) entre le noyau de pôle (10) et l'armature (12) est réglable dans la condition où la vanne magnétique est remplie de fluide.
